**Europäisches Patentamt**

**European Patent Office**

**Office européen des brevets**

(11) Veröffentlichungsnummer: **0 110 013**
**A1**

(12) **EUROPÄISCHE PATENTANMELDUNG**

(21) Anmeldenummer: **83108163.3**

(22) Anmeldetag: **18.08.83**

(51) Int. Cl.³: **G 11 B 23/04**

(30) Priorität: **28.10.82 DE 3239892**

(43) Veröffentlichungstag der Anmeldung: **13.06.84**
**Patentblatt 84/24**

(84) Benannte Vertragsstaaten: **AT BE CH DE FR GB IT LI**

(71) Anmelder: **GRUNDIG E.M.V. Elektro-Mechanische Versuchsanstalt Max Grundig & Co. KG., Kurgartenstrasse 37, D-8510 Fürth (DE)**

(72) Erfinder: **Zöllner, Rainer, Birkenweg 4, D-8501 Dietenhofen (DE)**

(54) **Video-Wendekassette.**

(57) Es wird eine Video-Wendekassette für tragbare Videogeräte beschrieben, die zur Veränderung des Wickelspulenabstandes zwei verschiebbar gelagerte Gehäuse-Halbteile (7, 8) aufweist. Die Gehäuse-Halbteile sind durch zwei flache, parallel angeordnete Führungsteile (13, 14) miteinander verbunden. Durch zwei den Führungsteilen zugeordnete Sperrhaken (17, 18) sind die beiden Gehäuse-Halbteile lösbar verriegelt.

# VIDEO - WENDEKASSETTE

## BESCHREIBUNG

Die Erfindung betrifft eine Video-Wendekassette in Form eines im wesentlichen quaderförmigen Körpers mit zwei darin drehbar gelagerten Wickelspulen für das Magnetband und einer an einer schmalen Längsfläche vorgesehenen Öffnung mit teilweise zurückgesetzter Gehäusewand zur freiliegenden Magnetbandführung, wobei die Kassette vorzugsweise aus zwei verriegelbaren im wesentlichen geschlossenen Halbteilen besteht, die zur Veränderung des Wickelspulenabstandes sowie zur Vergrößerung der freiliegenden Magnetbandlänge verschiebbar gelagert sind.

Es sind Magnetbandkassetten bekannt, bei denen die Bandwickelspulen mit einem bestimmten Abstand nebeneinander in einem Kassettengehäuse angeordnet und die Wickelspulen von außen über geräteseitig angeordnete Antriebsmittel antreibbar sind. Weiterhin sind auch Kassetten bekannt, die eine Veränderung des Abstandes der Band-

- 5 -

0110013

wickelspulen ermöglichen. Derartige Kassetten finden
insbesondere bei Videogeräten Anwendung. Bei Geräten
dieser Art werden von Seiten des Benutzers, je nach
Verwendungszweck, differenzierte Anforderungen gestellt.
So wird z. B. zwischen netzabhängigen Heimgeräten und
netzunabhängigen, also batteriebetriebenen, tragbaren
Geräten unterschieden. Hierbei spielt insbesondere das
Gewicht und die Größe der unterschiedlichen Geräte eine
erhebliche Rolle. So ist die Größe des Gerätes in erheblicher Weise von der Größe der Kassette abhängig.
Bei einem tragbaren Videogerät, das beispielsweise die
Bildaufzeichnung mit Hilfe einer Videokamera ermöglichen
soll, ist eine lange Aufnahmedauer, wie sie bei einem
Heimgerät gewünscht ist, nicht erforderlich. Dagegen
spielen jedoch das Gewicht und die Größe bei einem tragbaren Videogerät eine erhebliche Rolle.

Aus den unterschiedlichen Anforderungen eines Benutzers
an ein Video-Heimgerät einerseits und ein tragbares
batteriebetriebenes Videogerät andererseits ergeben sich
zwangsläufig abweichende Kassettengrößen mit unterschiedlicher Spieldauer. Der naheliegende Wunsch, daß die
kleinere, für tragbare Videogeräte geeignete Kassette,
auch auf einem für größere Kassetten eingerichtetem Heimgerät abgespielt werden soll, ist schwerlich zu realisieren.

Es ist zwar bereits eine Kassettenkonstruktion bekanntgeworden, bei der auch kleinere Kassetten in einem Video-Heimgerät für größere standardisierte Kassetten abgespielt werden können, die dafür erforderliche Konstruktion ist jedoch recht kompliziert und damit teuer. So werden gemäß diesem Stand der Technik Zahnradübersetzungen erforderlich, mit deren Hilfe der Bandwickelabstand ausgeglichen wird.

Ein weiteres Ausführungsbeispiel zur Anpassung einer kleineren Kassette in ein Heimgerät, das nur für eine größere Kassette geeignet ist, sieht vor, daß die Wickelspulen in einer besonderen Lagereinrichtung schwenkbar gelagert sind. So können die Wickelspulen mit einem kleineren Abstand in ein kleineres Kassettengehäuse und nach Verschwenken in ein größeres Kassettengehäuse eingesetzt werden. Eine Ausführung dieser Art ist ebenfalls aufwendig und erfordert vom Benutzer ein besonderes technisches Geschick.

Eine diese Nachteile teilweise vermeidbares Ausführungsbeispiel einer Kassette zur Veränderung des Wickelspulenabstandes sieht vor, die Wickelspulen in getrennten, zueinander verschiebbaren Gehäusehalbteilen unterzubringen. Die beiden Gehäusehalbteile werden hierbei durch einen als Hohlzylinder ausgebildeten Führungsabschnitt in einer festen Bewegungsbahn geführt.

Nachteilig ist hierbei, daß die Führung der beiden Gehäusehalbteile keinerlei Anpassung der auseinandergezogenen Kassetten-Gehäusehalbteile an die Lage des im Heimgerät veränderten Wickelspulenantriebs ermöglicht.

Der Erfindung liegt die Aufgabe zugrunde, eine relativ kleine Video-Wendekassette für tragbare Videogerät zu schaffen, die mit geringem technischen Aufwand auch in einem für größere standardisierte Kassetten vorgesehenem Video-Heimgerät abgespielt werden kann, wobei sich der Wickelspulenabstand in der Kassette dem Spulenantrieb im Heimgerät zwangsläufig anpaßt.

Die Lösung dieser Aufgabe erfolgt erfindungsgemäß durch die im kennzeichnenden Teil des Anspruchs 1 angegebenen Maßnahmen.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigt:

    Fig. 1    eine perspektivisch dargestellte Video-Wendekassette mit abgenommener Abdeckung und verriegelten Kassetten-Halbteilen,

    Fig. 2    eine perspektivisch dargestellte Video-Wendekassette nach Fig. 1 mit auseinandergezogenen Kassetten-Halbteilen,

Fig. 3    eine schematische Draufsicht auf
          eine Video-Wendekassette mit aus-
          einandergezogenen Kassetten-Halb-
          teilen nach Fig.2, wobei ein Bereich der Kassetten-Halbteile mit
          aufgebrochener Gehäusewand gezeichnet ist und

Fig. 4    eine vergrößerte Darstellung eines
          des für die Verriegelung der Kas-
          setten-Halbteile vorgesehenen Sperr-
          hakens.

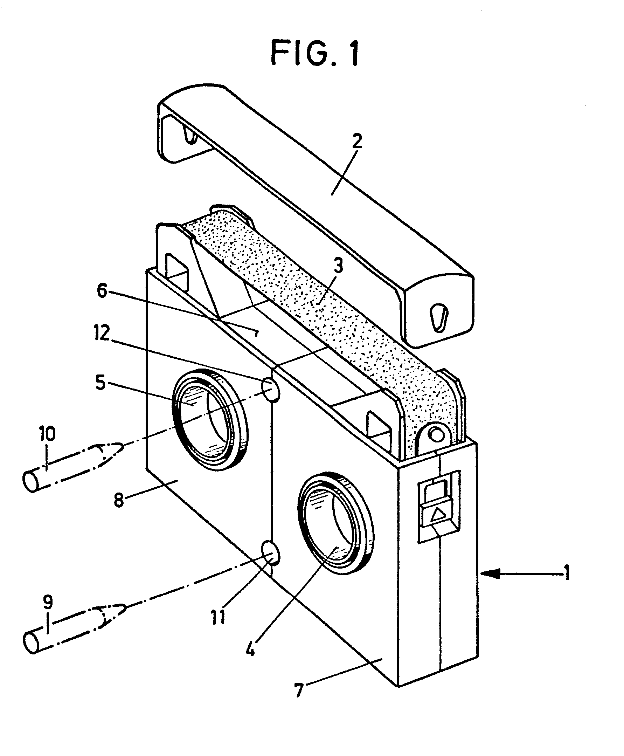

Die Figur 1 zeigt eine perspektivisch dargestellte Video-
Wendekassette 1 - kurz Kassette genannt - mit einer von
der Kassette abgehommenen Abdeckung 2. Die Abdeckung ist
für den normalen Verwendungsfall der Kassette in einem
tragbaren Videogerät stets auf der Kassette aufgesetzt
und schützt das sonst freiliegende Magnetband 3. Beim
Einlegen der Kassette in ein tragbares Videogerät wird
die Abdeckung automatisch seitlich abgeklappt, und das
Magnetband ist für den Zugriff von geräteseitig vorhandenen Ausziehstiften (nicht gezeichnet) freiliegend. Die
Kassette 1 weist die Form eines im wesentlichen quaderförmigen Körpers auf mit zwei darin drehbar gelagerten
Magnetband-Wickelspulen 4, 5. An einer schmalen Längsfläche der Kassette ist eine Öffnung mit teilweise zurückgesetzter Gehäusewand 6 zur freiliegenden Magnetbandführung vorgesehen. Die Kassette selbst besteht aus zwei im wesentlichen geschlossenen Halbteilen 7, 8. Die einzelnen Kassetten-Halbteile 7, 8 bestehen wiederum aus zwei fast vollständig geschlossenen Halbschalen, die zusammengeschraubt oder nach einer der sonst bekannten Verbindungsformen haltbar zusammengefügt sind. Beide Kassettenhalbteile 7, 8 sind verriegelbar und können durch Eindringen von zwei Stiften 9, 10 (strichpunktiert gezeichnet) in an der Kassette vorgesehenen Führungsbohrungen 11, 12 gelöst werden. Die Kassettenhalbteile sind sodann auf einen vorgesehenen Abstand auseinanderzuziehen.

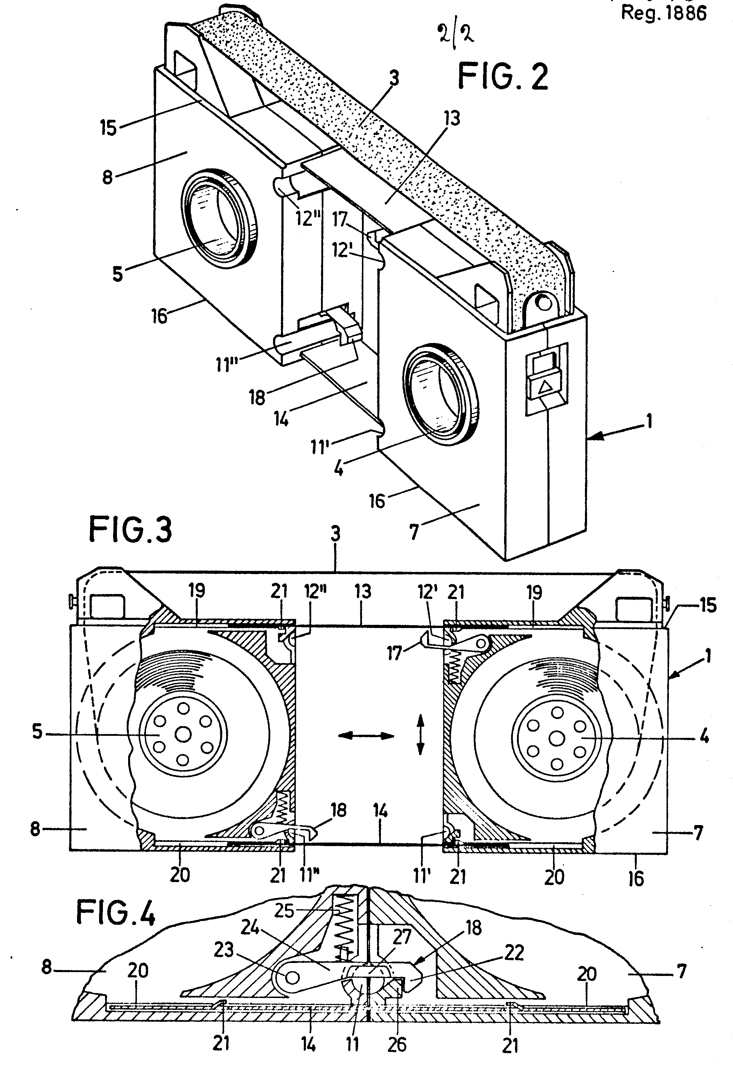

In der Figur 2 ist die Kassette im auseinandergezogenen Zustand gezeichnet. Die Verbindung der beiden verschiebbaren Kassetten-Halbteile 7, 8 erfolgt über zwei flache Führungsteile 13, 14. Die Führungsteile sind parallel und in geringem Abstand zu den äußeren schmalen Längsflächen 15, 16 der Kassetten-Halbteile angeordnet. Die Verriegelung der Kassettenhalbteile erfolgt im geschlossenen Zustand der Kassette über die den Führungsseiten zugeordneten Sperrhaken 17, 18. Die beiden Führungsbohrungen 11, 12 zur Entriegelung der Sperrhaken 17, 18 liegen im Teilungsbereich der beiden Kassetten-Halbteile 7, 8 und bestehen somit aus den vier Bohrungshälften 11', 11'' und 12', 12''.

Aus der Figur 3 sind weitere Einzelheiten über die Ausgestaltung der Sperrhaken und der Lagerung der Führungsteile 13, 14 in den Kassetten-Halbteilen 7, 8 zu erkennen. Die Führungsteile 13, 14 sind in Führungsnuten 19, 20, die sich im Inneren der Kassetten-Halbteile befinden, gelagert. Um sicherzustellen, daß sich die Kassetten-Halbteile 7, 8 nicht nur in Haupterstreckungsrichtung (s. waagerechte Pfeilangabe) der Kassette 1 gegeneinander verschieben lassen, sondern auch in begrenzter Weise senkrecht hierzu (s. senkrechte Pfeilangabe) ausweichen können, sind die Führungsteile 13, 14 aus schmalem Federbandstahl gefertigt.

Die Bandwickelspulen 4, 5 in der ausgezogenen Kassette können sich somit der Lage der im Heimgerät befindlichen und gegenüber dem tragbaren Videogerät unterschiedlichen Antriebselementen voll anpassen. Zur Begrenzung der Auszugslänge der Kassette weisen die Führungsteile 13, 14 Begrenzungsnasen 21 auf.

Die Figur 4 zeigt einen vergrößert gezeichneten Ausschnitt des Sperrhakens aus einem Kassetten-Halbteil. Der Sperrhaken 18 besteht aus einem Hakenteil 22, einem Lagerauge 23 und einem Verbindungssteg 24. Eine Druckfeder 25, die auf dem Verbindungssteg des Sperrhakens aufgesetzt ist und sich im Gehäuse des Kassetten-Halbteils abstützt, sorgt für den nötigen Verriegelungsdruck bei zusammengeschobenen Kassetten-Halbteilen. Im verriegelten Zustand beider Halbteile 7, 8 liegt das Sperrhaken-Hakenteil 22 des einen Halbteils in einem Sperrzahn 26 des anderen Halbteils. Über eine Schrägfläche 27, die sich am Sperrhaken-Verbindungssteg befindet, kann über das Auftreffen eines in die Kassette eintauchenden Stiftes 9, 10 die Verriegelung des Sperrhakens aufgehoben werden. Das Hakenteil 22 des Sperrhakens weist in bekannter Weise eine Anlaufschräge auf. Über einen Lagerstift ist der Sperrhaken 18 im Kassetten-Halbteil drehbar gelagert.

# V I D E O - W E N D E K A S S E T T E

## PATENTANSPRÜCHE

1. Video-Wendekassette in Form eines im wesentlichen quaderförmigen Körpers mit zwei darin drehbar gelagerten Wickelspulen für das Magnetband und einer an einer schmalen Längsfläche vorgesehenen Öffnung mit teilweise zurückgesetzter Gehäusewand zur freiliegenden Magnetbandführung, wobei die Kassette vorzugsweise aus zwei verriegelbaren im wesentlichen geschlossenen Halbteilen besteht, die zur Veränderung des Wickelspulenabstandes sowie zur Vergrößerung der freiliegenden Magnetbandlänge verschiebbar gelagert sind, d a d u r c h  g e k e n n z e i c h n e t , daß die Verbindung der verschiebbaren Kassetten-Halbteile (7,8) durch zwei flache Führungsteile (13, 14) erfolgt, die in parallel angeordneten Führungsnuten (19, 20), die sich in den beiden äußeren schmalen Längsflächen (15, 16) der Gehäusehalbteile befinden, eingelegt sind, und die Verriegelung der beiden Halbteile durch zwei seitenversetzt den Führungsteilen zugeordnete Sperrhaken (17, 18) erfolgt.

0110013

2. Video-Wendekassette nach Anspruch 1,
d a d u r c h   g e k e n n z e i c h n e t ,   daß die
Führungsteile (13, 14) aus schmalen bandartigen Metallstreifen bestehen.

3. Video-Wendekassette nach den Ansprüchen 1 und 2,
d a d u r c h   g e k e n n z e i c h n e t ,   daß die
Führungsteile aus antimagnetischem Federstahlband bestehen.

4. Video-Wendekassette nach Anspruch 1,
d a d u r c h   g e k e n n z e i c h n e t ,   daß der
aus Kunststoff einstückig gefertigte Sperrhaken (17, 18)
aus einem Hakenteil (22), einem Lagerauge (23) und einem
Verbindungssteg (24) besteht, wobei der Verbindungssteg
eine Schrägfläche (27) aufweist.

5. Video-Wendekassette nach den Ansprüchen 1 und 4,
d a d u r c h   g e k e n n z e i c h n e t ,   daß der
Sperrhaken mittels einer Druckfeder (25) in einer die
beiden Kassetten-Gehäusehalbteile verriegelnden Lage gehalten wird.

6. Video-Wendekassette nach einem der Ansprüche
1 bis 5,   d a d u r c h   g e k e n n z e i c h n e t ,
daß die Verriegelung der beiden Kassetten-Halbteile
durch Eintauchen wenigstens eines Stiftes (9, 10) in die Kassette aufgehoben wird, wobei der Stift auf die Schrägfläche (27) des Sperrhaken-Verbindungssteges (24) trifft
und den Haken aus einem Sperrzahn (26) hebt.

7. Video-Wendekassette nach Anspruch 6,
d a d u r c h   g e k e n n z e i c h n e t ,   daß für
jeden Sperrhaken ein Stift zur Entriegelung in die Kassette eintaucht.

- 4 -                    Beschreibung:

1/2

# FIG. 1

2/2

**FIG. 2**

**FIG.3**

**FIG.4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | EP-A-0 077 876 (GRUNDIG)<br><br>* Patentansprüche 1-6; Seite 3, Zeile 12 - Seite 5, Zeile 6; Figuren * | 1,4,6, 7 | G 11 B 23/04 |
| A | DE-C- 862 060 (LOEWE OPTA)<br>* Seite 2, Zeilen 66-75; Figuren 1a,1b * | 1 | |
| A | IBM TECHNICAL DISCLOSURE BULLETIN, Band 9, Nr. 10, März 1967, page 1397, New York, US R.B. JOHNSON et al.: "Small car-tridge for videotext" * Seite 1397; Figuren * | 1 | |
| A | FR-A-1 046 547 (AGFA)<br>* Seite 2, linke Spalte; Figuren 3,4 * | 1 | RECHERCHIERTE SACHGEBIETE (Int. Cl. ³)<br><br>G 11 B |
| A | FR-A-2 437 045 (MATSUSHITA) | | |
| A | IBM TECHNICAL DISCLOSURE BULLETIN, Band 9, Nr. 11, April 1967, Seite 1617, New York, US E.T. HATLEY: "Tape cartridge" | | |
| A | US-A-3 689 007 (N. KIHARA) | | |

Der vorliegende Recherchenbericht wurde für alle Patentansprüche erstellt.

| Recherchenort | Abschlußdatum der Recherche | Prüfer |
|---|---|---|
| DEN HAAG | 07-02-1984 | DECLAT M.G. |